Europäisches Patentamt

European Patent Office

Office européen des brevets

(19)

(11) Veröffentlichungsnummer: **0 211 344**
**A2**

(12) **EUROPÄISCHE PATENTANMELDUNG**

(21) Anmeldenummer: **86110227.5**

(22) Anmeldetag: **24.07.86**

(51) Int. Cl.⁴: **H04Q 9/14**

(30) Priorität: **26.07.85 DE 3526839**
**14.07.86 DE 3623705**

(43) Veröffentlichungstag der Anmeldung:
**25.02.87 Patentblatt 87/09**

(84) Benannte Vertragsstaaten:
**AT CH DE FR GB IT LI NL SE**

(71) Anmelder: **MITEC Moderne Industrietechnik GmbH**
**Daimlerstrasse 13**
**D-8012 Ottobrunn(DE)**

(72) Erfinder: **Mehnert, Walter, Dr. Dipl.-Ing.**
**Grillparzer Strasse 6**
**D-8012 Ottobrunn(DE)**

(74) Vertreter: **Strasser, Wolfgang, Dipl.-Phys et al**
**Patentanwälte Strohschänk, Uri & Strasser**
**Innere Wiener Strasse 8**
**D-8000 München 80(DE)**

(54) **Adressierbare Schaltungsanordnung.**

(57) Um einer adressierbaren Schaltungsanordnung - (1) mit einem Adressenspeicher (2), der eine die Schaltungsanordnung kennzeichnende Adresse speichert, und einer Adressen-Erkennungsschaltung (3), die die gespeicherte Adresse mit Adressen vergleicht, die der Schaltungsanordnung in Form von kodierten elektrischen Impulsen zugeführt werden, und die bei Übereinstimmung einer empfangenen mit der gespeicherten Adresse ein Steuersignal abgibt, wenigstens eine von den Adressensignalen in der Funktion verschiedene weitere Signalart in Form von elektrischen Impulsen ohne zusätzliche Signalübertragungskanäle oder -leitungen zuführen zu können, ist vorgesehen, daß die Impulse, die die Adressensignale bilden, sich von den Impulsen, die die weitere Signalart bilden, in einem wesentlichen Parameter wie z.B. in ihrer zeitlichen Länge unterscheiden, daß beide Impulsarten einem gemeinsamen Eingang (E) der Schaltungsanordnung zugeführt werden, und daß dem gemeinsamen Eingang (E) ein z.B. als Impulslängendiskriminator - (20) ausgebildeter Impulsdiskriminator nachgeschaltet ist, der die Adressenimpulse einem Adresseneingang (T) der Adressen-Erkennungsschaltung und die die weitere Signalart bildenden Impulse einer hiervon getrennten Verwendung zuführt.

FIG. 1

## Adressierbare Schaltungsanordnung

Die Erfindung betrifft eine adressierbare Schaltungsanordnung der im Oberbegriff von Anspruch 1 genannten Art.

Solche Schaltungsanordnungen werden beispielsweise in den Meß-und/oder Anwähleinheiten einer Meßanordnung verwendet, deren Meß-und Anwähleinheiten miteinander und mit einer Zentrale verbunden sind und einerseits von der Zentrale her individuell angewählt und aktiviert werden können und andererseits zumindest im aktivierten Zustand an die Zentrale Informationen, wie z.B. Meßergebnisse liefern. Solche Meßanordnungen sind z.B. in der DE-OS 30 25 837 beschrieben. Darüber hinaus können solche adressierbaren Schaltungsanordnungen überall dort eingesetzt werden, wo von einer oder mehreren Zentralen her eine Vielzahl von Außenstationen dadurch individuell anwählbar sein muß, daß über eine Informationsleitung Adressensignale in Form von kodierten elektrischen Impulsen ausgesandt werden, und wo es erforderlich ist, an die Außenstationen wenigstens eine weitere Signalart zu übermitteln, die eine von den Adressensignalen verschiedene oder zusätzliche Funktion besitzt, aber ebenfalls die Form von elektrischen Impulsen aufweist. Bei der in der oben genannten DE-OS beschriebenen Meßanordnung handelt es sich bei der weiteren Signalart um Setzimpulse, die den Adressen-Erkennungsschaltungen der adressierbaren Schaltungsanordnungen zumindest zu Beginn eines jeden Abfragezyklusses zugeführt werden müssen, um diese Adressen-Erkennungsschaltungen in einen Bereitschaftszustand zu versetzen, von dem ausgehend sie in der Lage sind, von der Zentrale gesendete Adressen mit der in ihrer Schaltungsanordnung gespeicherten individuellen Adresse zu vergleichen und bei Übereinstimmung ein Steuersignal zu erzeugen. Mit Hilfe dieses Steuersignals wird bei der genannten DE-OS in die erste Stufe eines nachgeordneten Schieberegisters eine logische "Eins" eingeschrieben, die dann im weiteren Verlauf von Stufe zu Stufe durch das Schieberegister weitergeschoben wird. Stattdessen kann durch das Steuersignal aber auch vorübergehend ein sonst geöffneter Schalter geschlossen oder ein normalerweise geschlossener Schalter kurzzeitig geöffnet oder irgendeine ähnliche Funktion ausgelöst werden.

Aus der DE-OS 30 25 837 ist es bekannt, die Adressensignalimpulse und die Setzsignalimpulse von der Zentrale her zwei getrennten Eingängen der adressierbaren Schaltungsanordnungen zuzuführen. Dies hat den Nachteil, daß für jede weitere Signalart, die den adressierbaren Schaltungsanordnungen zusätzlich zu den Adressensignalen zugeführt werden muß, ein eigener Signalübertragungsweg, z.B. eine eigene Kabelader zur Verfügung gestellt werden muß.

Demgegenüber liegt der Erfindung die Aufgabe zugrunde, eine adressierbare Schaltungsanordnung der eingangs genannten Art so weiterzubilden, daß ihr zusätzlich zu den Adressensignalen eine beliebige Anzahl von weiteren Signalarten zugeführt werden kann, ohne daß hierfür eine entsprechend große Anzahl von weiteren Signalübertragungswegen bzw. -leitungen erforderlich ist.

Zur Lösung dieser Aufgabe sieht die Erfindung die im Anspruch 1 niedergelegten Merkmale vor.

Durch die erfindungsgemäßen Maßnahmen ist es möglich, zusätzlich zu den Adressensignalen wenigstens eine weitere Signalart, im Prinzip aber beliebig viele weitere Signalarten, in Form von elektrischen Impulsen auf einer einzigen Informationsleitung bzw. in einem einzigen Informationskanal zu übertragen, wobei sich die Impulse der verschiedenen Signalarten voneinander vorzugsweise dadurch unterscheiden, daß sie verschiedene zeitliche Längen besitzen. Statt dessen ist es auch möglich, alle Impulse gleich lang auszubilden, die Impulse der verschiedenen Signalarten aber auf Träger unterschiedlicher Frequenz aufzumodulieren. In jedem Fall übernimmt die Erkennung und Verteilung der verschiedenen Signalarten, die alle einem gemeinsamen Eingang der adressierbaren Schaltungsanordnung zugeführt werden, ein in jeder Schaltungsanordnung vorgesehener, diesem gemeinsamen Eingang nachgeordneter Impulsdiskriminator, der so viele Ausgänge besitzt, wie verschiedene Signalarten in der betreffenden adressierbaren Schaltungsanordnung voneinander getrennt verarbeitet werden müssen.

Über die oben geschilderten Anwendungsfälle hinaus, bei denen durch das Steuersignal der Adressen-Erkennungsschaltung immer nur bis zum Empfang der nächsten Adresse, d.h. nur für kurze Zeit die vorgesehenen Funktionen ausgeübt werden können und/oder das Steuersignal bei einem zyklusmäßigen Durchtakten aller im System vorhandenen adressierbaren Schaltungsanordnungen bei jedem Zyklus notwendigerweise einmal erzeugt wird, ist es erfindungsgemäß möglich, eine oder mehrere von der adressierbaren Schaltungsanordnung ansteuerbare Einheiten, wie z.B. ein Relais, eine Lampe, einen Elektromotor, einen Oszillator, ein Schrittschaltwert usw. zu praktisch beliebigen Zeitpunkten ein-, um-, weiter-oder auszuschalten bzw. für beliebig lange Zeitspannen ein-bzw. ausgeschaltet bzw. in einem vorgebbaren Schaltzustand zu halten.

Zu diesem Zweck ist vorgesehen, daß die weiter Signalart von Schaltbefehlssignal-Impulsen gebildet wird, die den adressierbaren Schaltungsanordnungen entweder auf einer eigenen oder auf derselben Leitung wie die Adressensignal-Impulse zugeführt werden, für eine einer bestimmten Schaltungsanordnung nachgeordnete schaltbare Einheit aber nur dann wirksam werden, wenn bei oder kurz nach Empfang eines solchen Befehlssignal-Impulses diese Schaltungsanordnung aktiviert worden ist, d.h. die zugehörige Adressen-Erkennungsschaltung das Steuersignal abgibt. Auf diese Weise ist es möglich, eine große Anzahl von schaltbaren Einheiten, von denen jeder eine adressierbare Schaltungsanordnung zugeordnet ist, von einer Zentrale aus zu nahezu beliebigen Zeitpunkten ein-, aus-, um-oder weiterzuschalten, indem zunächst ein Adressensignal für die betreffende Schaltungsanordnung ausgesandt bzw. in einem laufenden Abfragezyklus das Auftreten dieses Adressensignals abgewartet und danach oder als letzter Impuls des Adressensignals ein Schaltbefehlssignal-Impuls übermittelt wird, der die schaltbare Einheit in einen anderen als den bisherigen Schaltzustand bringt. Für den Fall, daß sich die schaltbare Einheit nicht selbst in diesem Schaltzustand halten kann, umfaßt die adressierbare Schaltungsanordnung eine Schaltbefehls-Speicherschaltung, die solange ein entsprechendes Dauerschaltsignal abgibt, bis von der Zentral ein für die betreffende Einheit bestimmtes, neues Schaltbefehlssignal abgegeben wird.

Erfindungsgemäß ist es auch möglich, einer adressierbaren Schaltungsanordnung mehrere - schaltbare Einheiten nachzuordnen, für die dann individuelle Schaltbefehlssignale erzeugt und ausgesandt werden. Dies kann z.B. dadurch geschehen, daß die Schaltbefehlssignale für die verschiedenen jeweils einer adressierbaren Schaltungsanordnung nachgeordneten schaltbaren Einheiten zwar einem gemeinsamen Eingang der Schaltungsanordnung zugeführt werden, sich aber voneinander z.B. durch ihre zeitliche Länge unterscheiden und dann mit Hilfe eines Impulslängediskriminators erkannt und auf verschiedene Ausgangsleitungen weitergegeben werden.

Vorteilhafte Weiterbildungen der erfindungsgemäßen adressierbaren Schaltungsanordnung sind in den Unteransprüchen niedergelegt.

Die Erfindung wird im folgenden anhand von Ausführungsbeispielen unter Bezugnahme auf die Zeichnung beschrieben; in dieser zeigt:

Fig. 1 in schematischer Form eine erfindungsgemäße adressierbare Schaltungsanordnung mit einem als Impulslängendiskriminator ausgebildeten Impulsdiskriminator, der als einfacher Block dargestellt ist,

Fig. 2 eine rein digital arbeitende Ausführungsform des Impulslängendiskriminators aus Fig. 1 und

Fig. 3 eine mit analogen Zeitgliedern aufgebaute Ausführungsform des Impulslängendiskriminators aus Fig. 1.

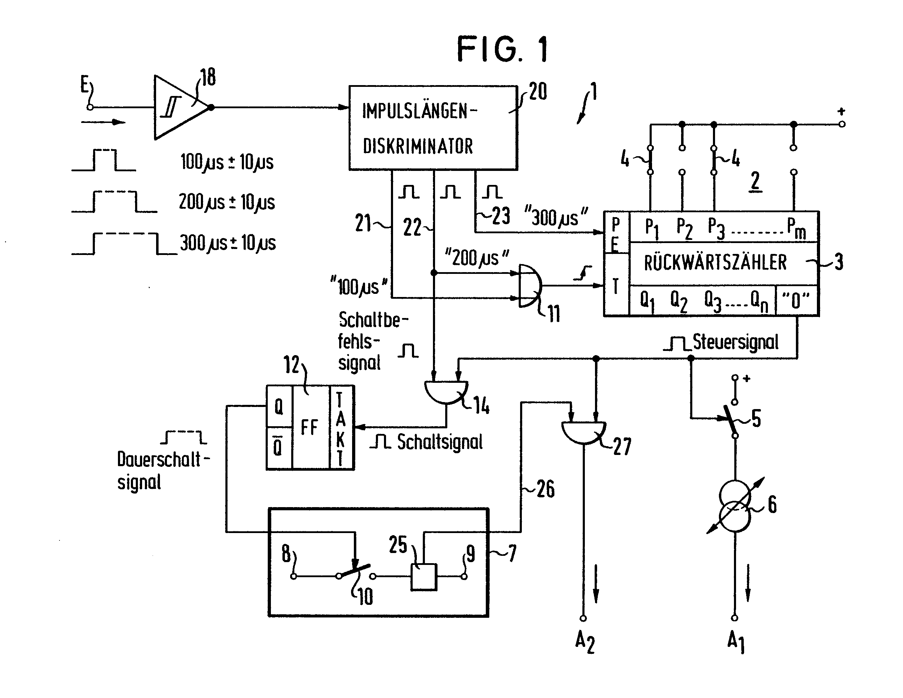

In Fig. 1 ist zwar nur eine einzige erfindungsgemäße adressierbare Schaltungsanordnung 1 wiedergegeben, doch ist davon auszugehen, daß es sich hierbei um einen Teil eines großen Systems handelt, das eine Vielzahl von entsprechend aufgebauten adressierbaren Schaltungsanordnungen 1 umfaßt, die über einen gemeinsamen Informations-Übertragungskanal, z.B. die Adern eines hier nicht dargestellten Kabels untereinander und mit einer ebenfalls nicht dargestellten Zentrale in Verbindung stehen.

Da es erforderlich ist, daß jede der vielen Schaltungseinheiten 1 von der Zentrale her individuell angewählt und für kurze Zeit in einen aktivierten Zustand versetzt werden kann, in dem sie ein weitere Funktionen auslösendes bzw. ermöglichendes Steuersignal erzeugt, ist jeder adressierbaren Schaltungsanordnung 1 eine eigene Adresse zugeordnet, die in einem zur Schaltungsanordnung 1 gehörenden Adressenspeicher 2 niedergelegt ist.

Da die von der Zentrale zur Anwahl einer Schaltungsanordnung in Form von kodierten elektrischen Rechteckimpulsen ausgesandte Adresse einer Vielzahl von adressierbaren Schaltungsanordnungen 1 gemeinsam zugeht, besitzt jede Schaltungsanordnung 1 eine Adressen-Erkennungsschaltung 3, die im vorliegenden Fall von einem programmierbaren Rückwärtszähler gebildet wird, dessen Programmiereingänge $P_1$, $P_2$, ..., $P_m$ mit Hilfe von Drahtbrücken 4 an eine positive Spannung gelegt oder freigelassen werden können. Die Gesamtheit dieser Drahtbrücken 4 und der freigelassenen Programmiereingänge bildet den Adressenspeicher 2.

Durch ein Setzsignal, das dem PE-Eingang des programmierbaren Rückwärtszählers 3 zugeführt wird, wird der durch die Verdrahtung der Progammiereingänge $P_1$,...,$P_m$ vorgegebene Zahlenwert in den Rückwärtszähler 3 eingeschrieben und vom Rückwärtszähler 3 jeweils um den Zahlenwert "1" verringert, wenn seinem Takteingang T ein Zählimpuls zugeführt wird. Erreicht der Zählwert im programmierbaren Rückwärtszähler 3 auf diese Weise den Zahlenwert "0" erscheint am bis dahin auf logisch "Null" liegenden "0"-Ausgang des Rückwärtszählers 3 eine logische "Eins", die als Steuersignal Verwendung findet.

Diese Art der Adressenspeicherung und -erkennung hat zur Folge, daß die Adressen von der Zentrale in Form einer Folge von elektrischen Rechteckimpulsen einheitlicher Länge ausgesandt werden können, wobei die Kodierung einer bestimmten Adresse durch die Anzahl der in einer solchen Impulsfolge enthaltenen Einzelimpulse gegeben ist. Um also beispielsweise die adressierbare Schaltungseinheit 1 mit der Adresse "FÜNF" anzuwählen, muß die Zentrale eine Impulsfolge mit fünf Einzelimpulsen aussenden, wobei dann, wenn keine weiteren Maßnahmen ergriffen werden, der Reihe nach zuerst die adressierbare Schaltungsanordnung 1 mit der Adresse "EINS", dann die Schaltungsanordnung 1 mit der Adresse "ZWEI" usw. angewählt werden.

Die logische "Eins", die am "0"-Ausgang des programmierbaren Rückwärtszählers 3 einer angewählten Schaltungsanordnung 1 als Steuersignal erscheint, dient z.B. dazu, einen Schalter 5 zu - schließen, wodurch ein Meßfühler 6, der bei dem im Fig. 1 gezeigten Ausführungsbeispiel von einer temperaturempfindlichen Stromquelle 6 gebildet wird, an eine positive Versorgungsspannung gelegt wird. Hierdurch gibt der Meßfühler 6 einen von der Größe seiner Umgebungstemperatur abhängigen Einprägestrom ab, der über den Ausgang $A_1$, der mit einer Ader des nicht dargestellten Kabels in Verbindung steht, der Zentrale als Meßwert zugeführt wird.

Beim Empfang des nächsten von der Zentrale kommenden Adressenimpulses zählt der Rückwärtszähler 3 einer bis dahin angewählten und aktivierten programmierbaren Schaltungsanordnung 1 auf den Zählwert "-1" und das Steuersignal an seinem "0"-Ausgang verschwindet, so daß der Schalter 5 wieder geöffnet und der Meßfühler 6 nicht mehr mit Spannung versorgt wird. Die Aktivierung einer bestimmten programmierbaren Schaltungsanordnung 1 dauert also immer nur so lange, bis von der Zentrale das nächste Adressensignal ausgesandt wird, was im vorliegenden Fall, in dem dieses nächste Adressensignal nur aus einem einzigen Adressenimpuls besteht, bei einem schnell durchgetakteten Gesamtsystem nur ein vergleichsweise kurzer Zeitraum ist.

Nun besteht aber bei vielen Anwendungsfällen ein Bedarf, mit Hilfe einer angewählten programmierbaren Schaltungsanordnung 1 irgendeine Einheit 7, z.B. eine Lampe, einen Meßfühler, einen Elektromotor oder dergleichen nicht nur kurzzeitig, d.h. für die Dauer des aktivierten Zustandes der Schaltungsanordnung 1, sondern für einen längeren Zeitraum einzuschalten und später zu einem nahezu frei wählbaren Zeitpunkt auch wieder auszuschalten. In der Fig. 1 ist die Einheit 7 symbolisch als Rechteck dargestellt, in dem ein zwei Anschlüsse 8, 9 miteinander verbindender bzw. voneinander trennender Ein/Aus-Schalter 10 wiedergegeben ist.

Dieser Schalter 10 soll nach dem oben gesagten also nur dann zu einer Änderung seines Schaltzustandes veranlaßt werden, wenn seine zugehörige adressierbare Schaltungsanordnung 1 aktiviert ist und ihr gleichzeitig von der Zentrale her ein impulsförmiges Schaltbefehlssignal zugeführt wird.

Zu diesem Zweck wird der Schalter 10 von einer Schaltsignal-Speicherschaltung 12 angesteuert, die im vorliegenden Fall von einem Flip-Flop gebildet wird, dessen Q-Ausgang mit dem Steuereingang des Schalters 10 verbunden ist. Der Takt-Eingang des Flip-Flops 12 erhält von einer Schaltbefehlsschaltung 14, die im vorliegenden Fall von einem UND-Gatter gebildet wird, immer dann ein impulsförmiges Schaltsignal, wenn von der Zentral ein Schaltbefehlssignal abgegeben wird und gleichzeitig die betrachtete programmierbare Schaltungsanordnung 1 aktiviert ist. Um letzteres zu erkennen, ist der eine Eingang des UND-Gatters 14 mit dem "0"-Ausgang des Rückwärtszählers 3 verbunden, so daß ein an seinem zweiten Eingang erscheinender Impuls nur dann weitergegeben wird, wenn am "0"-Ausgang des Rückwärtszählers 3 das Steuersignal in Form einer logischen "Eins" vorhanden ist.

Geht man also davon aus, daß sich das die Schaltsignal-Speicherschaltung 12 bildende Flip-Flop zunächst im Ruhezustand befindet, in dem an seinem Q-Ausgang eine logische "Null" erscheint, wodurch der Schalter 10 geöffnet ist, so reagiert dieses Flip-Flop 12 auf die steigende Flanke eines von der Schaltbefehlsschaltung 14 abgegebenen Schaltsignal-Impulses in der Weise, daß an seinem Q-Ausgang eine logische "Eins" erscheint, die den Schalter 10 schließt und als Dauerschaltsignal so lange erhalten bleibt, bis dem Takteingang des Flip-Flops 12 ein weiteres Schaltsignal zugeführt wird. Nimmt man an, daß die Zentrale die Vielzahl von progammierbaren Schaltungsanordnungen 1 ständig der Reihe nach anwählt, so kann ein solches Schaltsignal, durch das der Schalter 10 entweder geschlossen oder geöffnet wird, in jedem Anwähl-Zyklus einmal erzeugt werden. Je nach Anzahl der mit der Zentrale verbundenen programmierbaren Schaltungsanordnungen 1 ist eine solche Änderung des Schaltzustandes des Schalters 10 in Abständen einiger Millisekunden bzw. Hundertstel-oder Zehntel-Sekunden möglich; abgesehen von dieser Beschränkung für die Ein-und Ausschaltzeitpunkte kann also der Schalter 10 praktisch zu beliebigen Zeitpunkten geöffnet bzw. geschlossen werden und für beliebig lange Zeiträume geöffnet bzw. geschlossen bleiben.

Aus dieser Schilderung der grundsätzlichen Funktionen der anwählbaren Schaltungsanordnung 1 innerhalb eines eine Vielzahl solcher Schaltungsanordnungen umfassenden Systems ergibt sich, daß jeder dieser Schaltungsanordnungen 1 von der Zentrale wenigstens drei verschiedene Arten von elektrischen Rechteckimpulsen zugeführt werden müssen, nämlich Adressensignalimpulse bzw. Zählimpulse für den programmierbaren Rückwärtszähler 3, Schaltbefehlssignal-Impulse zum Ein-bzw. Ausschalten der Einheit 7 und Setzsignal-Impulse, die dazu dienen, am Anfang eines jeden Anwähl-Zyklusses die im Adressenspeicher 2 enthaltene Adresse erneut in den die Adressen-Erkennungsschaltung 3 bildenden Rückwärtszähler einzuschreiben. Sollen einer adressierbaren Schaltungsanordnung 1 mehrere Einheiten 7 zugeordnet werden, die voneinander unabhängig ein-bzw. ausgeschaltet werden können, so ist es erforderlich, mehrere Arten von Schaltbefehlssignal-Impulsen vorzusehen, die dann zu den geeigneten Zeitpunkten von der Zentrale an die jeweilige adressierbare Schaltungsanordnung 1 gesandt werden.

Erfindungsgemäß handelt es sich bei allen genannten Impulsarten um elektrische Rechtecksimpulse, die sich bei den in den Figuren wiedergegebenen Ausführungsbeispielen voneinander nur durch ihre zeitliche Länge unterscheiden. Es wird hier angenommen, daß die von der Zentrale ausgesandten Adressenimpulse jeweils eine Länge von 100 $\mu$s besitzen, die um maximal $\pm$ 10 $\mu$s - schwanken kann, während die Schaltbefehlssignal-Impulse eine zeitliche Länge von 200 $\pm$ 10 $\mu$s und die Setzsignal-Impulse eine zeitliche Länge von 300 $\pm$ 10 $\mu$s besitzen.

Alle diese verschiedenen Impulsarten werden den adressierbaren Schaltungsanordnungen 1 jeweils auf einer gemeinsamen Leitung über einen gemeinsamen Eingang E zugeführt, dem, wie Fig. 1 zeigt, zunächst ein die Impulsform regenerierender und invertierender Schmitt-Trigger 18 nachgeschaltet ist. Es wird bei dieser Beschreibung davon ausgegangen, daß die am Eingang E ankommenden Rechteckimpulse ungestört sind, d.h. insbesondere die für ihre eindeutige Identifizierung erforderliche, korrekte zeitliche Länge und auch die richtigen zeitlichen Abstände voneinander besitzen und daß keine Störimpulse auftreten, die mit den Nutzsignalimpulsen verwechselt werden oder diese so in kürzere Impulse zerhacken könnten, daß die Nutzsignalimpulse nicht mehr als solche erkennbar sind. Als einzige Störung wird hier zugelassen, daß die zeitliche Länge der Impulse innerhalb der oben angegebenen Schwankungsbreite von $\pm$10$\mu$s variiert. Sollten diese Bedingungen nicht ohne weiteres erfüllbar sein, ist es erforderlich, ein digitales Filter vorzusehen, das die Nutzsignalimpulse von den Störimpulsen trennt und erforderlichenfalls zerhackte Nutzsignalimpulse wieder zur vollen Länge regeneriert. Ein solches Filter ist beispielsweise in der deutschen Patentanmeldung P 36 08 440.9 beschrieben.

Die invertierten Ausgangsimpulse des Schmitt-Triggers 18 werden dann einem als Impulslängendiskriminator 20 ausgebildeten Impulsdiskriminator zugeführt, der drei Ausgangsleitungen 21, 22, 23 besitzt. Auf der Ausgangsleitung 21 gibt der Impulslängendiskriminator immer dann einen Impuls geeigneter Länge ab, wenn er an seinem Impulseingang einen Adressensignal-Impuls, d.h. einen Impuls erhalten hat, dessen zeitliche Länge zwischen 90 $\mu$s und 110 $\mu$s liegt. Auf der Ausgangsleitung 22 gibt der Impulslängendiskriminator immer dann einen Impuls geeigneter Länge ab, wenn er an seinem Eingang einen Schaltbefehlssignal-Impuls, d.h. einen Impuls erhalten hat, dessen zeitliche Länge zwischen 190 $\mu$s und 210 $\mu$s liegt. Auf der Ausgangsleitung 23 gibt der Impulslängendiskriminator 20 immer dann einen Ausgangsimpuls geeigneter Länge ab, wenn er an seinem Eingang einen Setzsignalimpuls, d.h. einen Impuls mit einer zeitlichen Länge zwischen 290 $\mu$s und 310 $\mu$s erhalten hat.

Wie Fig. 1 zeigt, ist die Ausgangsleitung 21 des Impulslängendiskriminators 20 über ein ODER-Gatter 11 mit dem Zähleingang T des Rückwärtszählers 3 verbunden, so daß die auf der Ausgangsleitung 21 erscheinenden Ausgangsimpulse des Impulslängendiskriminators 20 dem Rückwärtszähler 3 als Adressen-bzw. Zählimpulse zugeführt werden. Der zweite Eingang des ODER-Gatters 11 ist mit der Ausgangsleitung 22 des Impulslängendiskriminators 20 verbunden, die überdies auch den zweiten Eingang des UND-Gatters 14 ansteuert. Auf diese Weise üben die Schaltbefehlssignal-Impulse eine doppelte Funktion aus. Einerseits dienen sie als Zählimpulse für den Rückwärtszähler 3 und andererseits als Schaltsignalimpulse zur Triggerung des Flip-Flops 12, wenn am "0"-Ausgang des Rückwärtszählers 3 ein Steuersignal vorhanden ist. Diese Doppelfunktion der Schaltbefehlssignal-Impulse hat den Vorteil, daß es nicht erforderlich ist, zur Änderung des Schaltzustandes Flip-Flops 12 einer bestimmten adressierbaren Schaltungsanordnung 1 zuerst den betreffenden Rückwärtszähler auf den Zählwert "0" herunterzutakten und dann einen zusätzlichen Schaltbefehlssignal-Impuls zu erzeugen, was insbesondere dann, wenn bei einem größeren System sehr häufig Einheiten 7 ein-oder ausgeschaltet werden müssen, zu einer erheblichen Vermehrung der zu übertragenden Impulse und dadurch zu einer unerwünschten Verlängerung der Abtastzyklus-Zeiten führen würde. Stattdessen kann vielmehr der betreffende Rückwärtszähler 3 bis auf den Zählwert "EINS" heruntergetaktet und dann durch Erzeugung eines Schaltbefehlssignal-Impulses zur Abgabe eines Steuersignals veranlaßt werden. Da der Takteingang des Rückwärtszählers 3 auf die steigende Flanke der ihm zugeführten Impulse reagiert wird das UND-Gatter 14 in jedem Fall rechtzeitig geöffnet, bevor der Schaltbefehlssignal-Impuls wieder verschwindet.

Erfindungsgemäß kann das ODER-Gatter 11 auch weggelassen werden, so daß der Zähleingang T des Rückwärtszählers 3 nur von den auf der Leitung 21 erscheinenden Ausgangsimpulsen des Impulslängendiskriminators 20 angesteuert wird, während an den betreffenden Eingang des UND-Gatters 14 nur die auf der Ausgangsleitung 22 des Impulslängendiskriminators 20 erscheinenden Impulse gelangen.

Beim Anlegen der Versorgungsspannung sowohl bei Betriebsaufnahme als auch nach einer Betriebsunterbrechung können die Flip-Flops 12 der verschiedenen Schaltungsanordnungen 1 beliebige Schaltzustände annehmen, d.h. unabhängig von den zuvor gegebenen Befehlen ein Dauerschaltsignal erzeugen oder nicht. Damit die Zentrale in solchen Fällen feststellen kann, welche Einheiten ein-bzw. ausgeschaltet sind, umfaßt jede der Einheiten 7 einen Sensor 25, der den Schaltzustand des Schalters 10 abfragt, also z.B. feststellt, ob durch den Schalter 10 bzw. eine dem Schalter 10 unmittelbar vor-oder nachgeschaltete Leitung ein Strom fließt oder nicht. Ist der Schalter 10 geschlossen, so kann vorgesehen sein, daß der Sensor 25 ein einer loggischen "Eins" entsprechendes Signal abgibt, das über die Leitung 26 dem einen Eingang eines UND-Gatters 27 zugeführt wird, an dessen anderem Eingang das vom "0"-Ausgang des Rückwärtszählers 3 abgegebene Steuersignal liegt. Das Ausgangssignal des UND-Gatters 27 wird über einen Ausgang A₂ beispielsweise auf eine Ader des Kabels gegeben, das die Schaltungsanordnungen 1 mit der Zentrale verbindet. Hierbei können alle Ausgänge A₂ mit ein und derselben Kabelader verbunden sein, da das UND-Gatter 27 nur dann ein den Schaltzustand des Schalters 10 kennzeichnendes Signal am Ausgang A₂ erzeugt, wenn die betreffende adressierbare Schaltungsanordnung 1 angewählt worden ist und ihre Adressen-Erkennungsschaltung 3 das Steuersignal erzeugt. Auf diese Weise kann die Zentrale der Reihe nach abfragen, in welchen Schaltzuständen sich die einzelnen Einheiten 7 befinden und gegebenenfalls Abweichungen von den befohlenen Schaltzuständen korrigieren.

Abweichend von der in Fig. 1 gezeigten Ausführungsform kann die Einheit 7 z.B. auch von einem selbsthaltenden Relais gebildet sein, dessen Schaltkontakte dann dem Schalter 10 entsprechen, während seine Selbsthalteeinrichtung die Schaltsignal-Speicherschaltung bildet. In diesem Fall kann dann das Flipflop 12 weggelassen und durch das Ausgangssignal des UND-Gatters 14 der Schalteingang des Relais direkt oder über einen Treiber angesteuert werden.

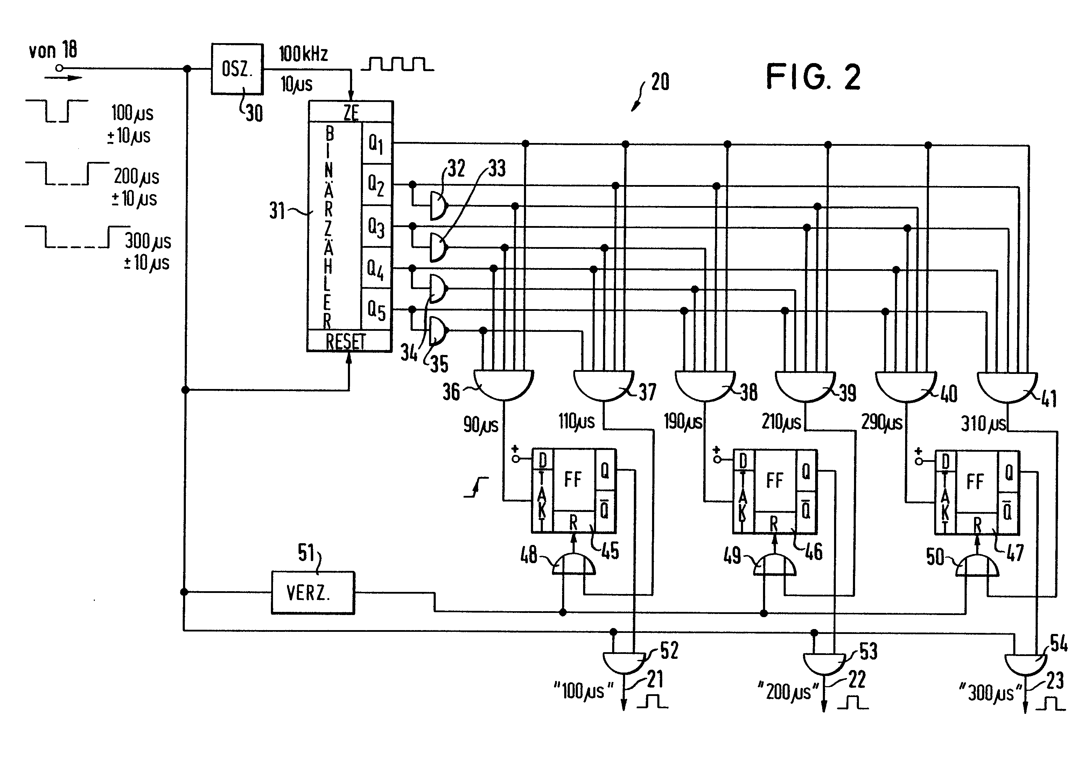

In Fig. 2 ist eine rein digitale Ausführungsform des Impulslängendiskriminators 20 aus Fig. 1 wiedergegeben. Die vom invertierenden Schmitt-Trigger 18 kommenden Eingangsimpulse werden einerseits dem auf logisch "Null" ansprechenden Freigabe-Eingang eines Oszillators 30 zugeführt, der daraufhin beispielsweise mit einer Frequenz von 100 kHz zu schwingen anfängt. Die Ausgangsimpulse dieses Oszillators gelangen an den Zähleingang eines Binärzählers 31, dessen Reset-Eingang ebenfalls mit dem Ausgang des invertierenden Schmitt-Triggers 18 verbunden ist, so daß er beim Erscheinen eines Eingangsimpulses für den Impulslängendiskriminator 20 freigegeben wird.

Den Binärausgängen $Q_1$ bis $Q_5$ sind im vorliegenden Fall vier Inverter 32 bis 35 und sechs UND-Gatter 36 bis 41 nachgeschaltet, von denen jedes fünf Eingänge umfaßt, die mit den Binärausgängen $Q_1$ bis $Q_5$ bzw. den die Signale der Binärausgänge $Q_1$ bis $Q_5$ invertierenden Invertern 32 bis 35 so verbunden sind, daß das UND-Gatter 36 den Zahlenwert NEUN, das UND-Gatter 37 den Zahlenwert ELF, das UND-Gatter 38 den Zahlenwert NEUNZEHN, das UND-Gatter 39 den Zahlenwert EINUNDZWANZIG, das UND-Gatter 40 den Zahlenwert NEUNUNDZWANZIG und das UND-Gatter 41 den Zahlenwert EINUNDDREISSIG abfragt. Am Ausgang der UND-Gatter 36 bis 41 erscheint also jeweils dann ein positiver Spannungsimpuls, wenn der Binärzähler 31 für einen Zeitraum gezählt hat, der 90 μs lang, 110 μs lang, 190 μs lang, 210 μs lang bzw. 310 μs lang ist.

Weiterhin umfaßt der Impulslängendiskriminator 20 drei D-Flip-Flops 45, 46 und 47, wobei der Takteingang des D-Flip-Flops 45 mit dem Ausgang des UND-Gatters 36, der Takteingang des D-Flip-Flops 46 mit dem Ausgang des UND-Gatters 38 und der Takteingang des D-Flip-Flops 47 mit dem Ausgang des UND-Gatters 40 verbunden ist. Die D-Eingänge der Flip-Flops 45 bis 47 sind jeweils auf eine positive Spannung gelegt.

Jedem der D-Flip-Flops 45 bis 47 ist ein ODER-Gatter 48, 49 bzw. 50 zugeordnet, wobei der Ausgang des betreffenden ODER-Gatters jeweils den Rücksetzeingang des zugehörigen Flip-Flops ansteuert. Der eine Eingang des ODER-Gatters 48 ist mit dem Ausgang des UND-Gatters 37 verbunden, während der eine Eingang des ODER-Gatters 49 mit dem Ausgang des UND-Gatters 39 und der eine Eingang des ODER-Gatters 50 mit dem Ausgang des UND-Gatters 41 verbunden ist. Der jeweils zweite Eingang der ODER-Gatter 48, 49 und 50 ist mit dem Ausgang eines Verzögerungsgliedes 51 verbunden, dessen Eingang ebenfalls die vom invertierenden Schmitt-Trigger 18 abgegebenen Impulse zugeführt werden. Jeder der Q-Ausgänge der D-Flip-FLops 45, 46 und 47 steuert den einen Eingang eines zugehörigen UND-Gatters 52, 53 bzw. 54 an, deren jeweils zweite Eingänge die vom invertierenden Schmitt-Trigger 18 abgegebenen Eingangsimpulse des Impulslängendiskriminators unmittelbar erhalten.

Der Ausgang des UND-Gatters 52 ist mit der auch in Fig. 1 dargestellten Leitung 21 verbunden, während der Ausgang des UND-Gatters 53 die Leitung 22 und der Ausgang des UND-Gatters 54 die Leitung 23 mit Signalen versorgt.

Erscheint am Eingang des Impulslängendiskriminators ein negativer Eingangsimpuls, so werden nicht nur der Oszillator 30 zum Schwingen und der Binärzähler 31 zum Abzählen der Oszillatorimpulse freigegeben, sondern es werden gleichzeitig auch die UND-Gatter 52, 53 und 54 gesperrt. Sind nach Erscheinen der Vorderflanke des Eingangsimpulses 90 $\mu$s vergangen, so erscheint am Ausgang des UND-Gatters 36 eine logische "Eins" und die dabei auftretende steigende Flanke setzt das D-Flip-Flop 45, so daß an dessen Q-Ausgang eine logische "Eins" erscheint. Solange jedoch am Eingang des Impulslängendiskriminators 20 ein negativer Eingangsimpuls anliegt, bleibt das UND-Gatter 52 gesperrt, so daß sich die auf der Leitung 21 vorhandene logische "Null" nicht ändert. Dauert der Eingangsimpuls länger als 110 $\mu$s, so erscheint zu diesem Zeitpunkt eine logische "Eins" am Ausgang des UND-Gatters 37, die über das ODER-Gatter 48 das D-Flip-Flop 45 zurücksetzt, so daß die nunmehr am Q-Ausgang dieses Flip-Flops wieder erscheinende logische "Null" das UND-Gatter 52 weiterhin sperrt, so daß an seinem Ausgang, d.h. auf der Leitung 21 irgendeine Änderung eingetreten ist.

Entsprechendes geschieht nach 190 $\mu$s und 210 $\mu$s an den Ausgängen der UND-Gatter 38 und 39, des D-Flip-Flops 46, des ODER-Gatters 49 und des UND-Gatters 53 bzw. nach 290 $\mu$s und 310 $\mu$s an den Ausgängen der UND-Gatter 40, 41, des D-Flip-Flops 47, des Oder-Gatters 50 und des UND-Gatters 54.

Handelt es sich jedoch bei dem Eingangsimpuls um einen Adressenimpuls von beispielsweise 105 $\mu$s Länge, so wird zwar das D-Flip-Flop 45 nach 90 $\mu$s durch das UND-Gatter 36 gesetzt, das Gatter 37 kann aber keine logische "Eins" mehr erzeugen, da durch die am Impulsende auftretende logische "Eins" der Oszillator 30 angehalten und der Binärzähler 31 zurückgesetzt wird. Da zu diesem Zeitpunkt am Q-Ausgang des gesetzten D-Flip-Flops 45 eine logische "Eins" vorhanden ist, wird an beide Eingänge des UND-Gatters 52 so lange eine logische "Eins" angelegt, und als Ausgangssignal des UND-Gatters 52 auf die Leitung 21 gegeben, bis das Verzögerungsglied 51 die bei Ende des Eingangsimpulses aufgetretene logische "Eins" an seinen Ausgang weitergegeben und damit über das ODER-Gatter 48 das D-Flip-Flop 45 zurückgesetzt hat. Dann geht der Q-Ausgang dieses Flip-Flops wieder auf logisch "Null" und das UND-Gatter 52 wird wieder gesperrt.

Aufgrund der Tatsache, daß innerhalb des Zeitfensters von 90 $\mu$s bis 110 $\mu$s das Ende des Eingangsimpulses aufgetreten ist, hat daher das UND-Gatter 52 einen Impuls auf die Leitung 21 gegeben, dessen zeitliche Länge durch die Verzögerungszeit des Verzögerungsgliedes 51 gegeben ist. In entsprechender Weise erscheinen derartige Impulse auf den Leitungen 22 bzw. 23, wenn das Ende des Eingangsimpulses des Impulslängendiskriminators 20 in das Zeitfenster zwischen 190 $\mu$s und 210 $\mu$s bzw. in das Zeitfenster 290 $\mu$s bis 310 $\mu$s fällt.

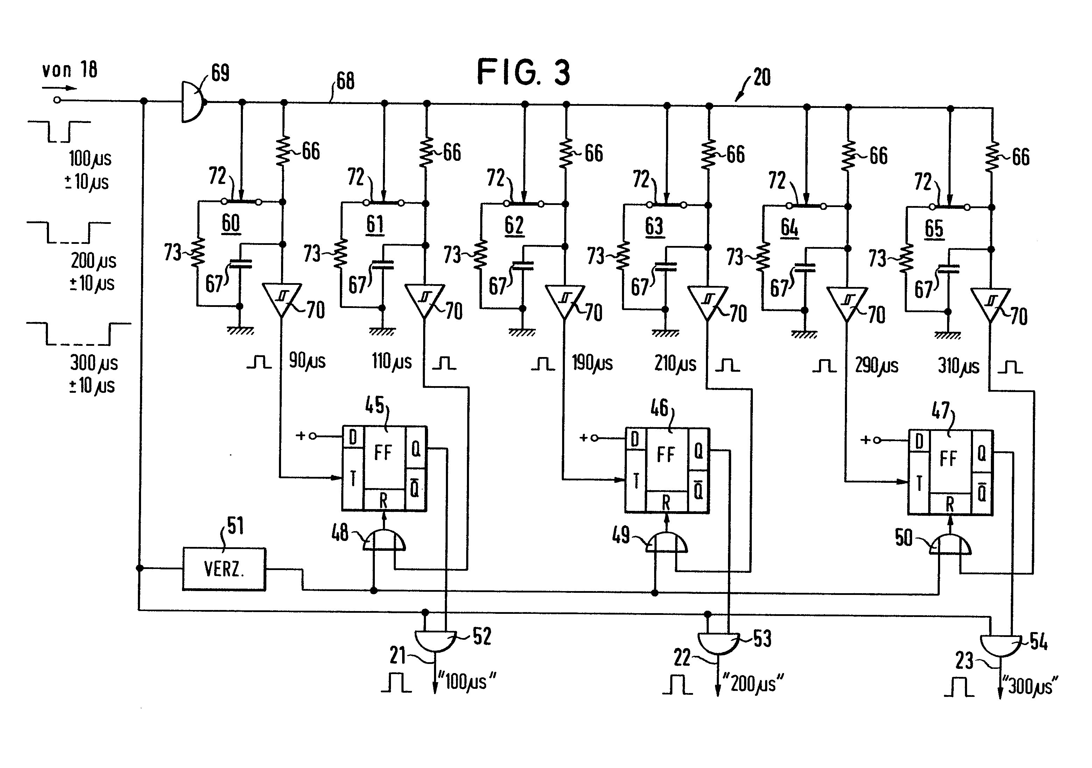

Das in Fig. 3 dargestellte Ausführungsbeispiel eines Impulslängendiskiminators umfaßt in gleicher Weise wie das Ausführungsbeispiel aus Fig. 2 die drei D-Flip-Flops 45, 46, 47, die drei ODER-Gatter 48, 49, 50, die drei UND-Gatter 52, 53, 54 und das Verzögerungsglied 51, die in gleicher Weise miteinander verbunden sind und funktionieren, wie dies im Zusammenhang mit Fig. 2 beschrieben wurde.

Der wesentliche Unterschied zwischen diesen beiden Ausführungsbeispielen besteht darin, daß bei der Ausführungsform nach Fig. 3 die Zeitfenster nicht auf digitale Weise sondern mit Hilfe von analogen Schaltkreisen 60 bis 65 definiert werden. Da alle diese analogen Schaltkreise in derselben Weise aufgebaut sind, wird ihr Aufbau und ihre Funktion im folgenden nur anhand des Schaltkreises 60 beschrieben.

Der Schaltkreis 60 besitzt als zeitbestimmendes Glied ein RC-Glied, das von einem Ladewiderstand 66 und einem Kondensator 67 gebildet wird. Diese beiden Elemente sind miteinander in Reihe geschaltet und der das eine Ende dieser Reihenschaltung bildende Anschluß des Ladewiderstandes 66 ist mit einer Leitung 68 verbunden, auf der die durch einen Inverter 69 invertierenden Eingangsimpulse des Impulslängendiskriminators 20 erscheinen. Der das andere Ende des RC-Gliedes 66, 67 bildende Anschluß des Kondensators 67 ist auf Masse gelegt. Mit dem Verbindungspunkt zwischen dem Ladewiderstand 66 und dem Kondensator 67 ist der Eingang eines Schmitt-Triggers 70 verbunden, dessen Ausgang im Fall der analogen Schaltkreise 60, 62 und 64 den Takteingang des zugehörigen D-Flip-Flops 45, 46 bzw. 47 und im Fall der analogen Schaltkreise 61, 63, 65 den zweiten Eingang des ODER-Gatters 48, 49, 50 und über dessen Ausgang den Rücksetz-Eingang des zugehörigen D-Flip-Flops ansteuert.

Parallel zu jedem Kondensator 67 ist ein steuerbarer Schalter 72 und ein mit diesem Schalter in Reihe liegender Entladewiderstand 73 angeordnet. Die Steuereingänge der Schalter 72 sind unmittelbar mit der Leitung 68 verbunden und es ist hier angenommen, daß die Schalter 72 durch die normalerweise auf der Leitung 68 herrschende logische "Null" geschlossen gehalten und durch die beim Auftreten eines Eingangsimpulses für den Impulslängendiskriminator 20 auf der Leitung 68 erscheinende logische "Eins" geöffnet werden.

Die Werte der Ladewiderstände 66 und der Kondensatoren 67 sind so gewählt, daß die Schmitt-Trigger 70 der verschiedenen analogen Schaltkreise 90 µs, 110 µs, 190 µs, 210 µs, 290 µs bzw. 310 µs nach dem Auftreten eines positiven Spannungsimpulses auf der Leitung 68 ansprechen, wenn dieser Impuls genügend lange anliegt.

Erscheint ein solcher Impuls so werden zunächst sämtliche Schalter 72 geöffnet, deren Schließen dafür gesorgt hat, daß die Kondensatoren 67 mit Sicherheit vollständig entladen waren. Die auf der Leitung 68 herrschende logische "Eins" versucht dann, über die Ladewiderstände 66 die Kondensatoren 67 aufzuladen. Nach den durch die entsprechenden Zeitkonstanten vorgegebenen, oben genannten Zeiten wird jeweils die Ansprechschwelle des zugehörigen Schmitt-Triggers 70 überschritten, so daß dessen Ausgang ein positives Ausgangssignal liefert, mit dessen Hilfe dann in entsprechender Weise wie bei dem in Fig. 2 geschilderten Ausführungsbeispiel durch die Ausgangssignale der UND-Gatter 36 bis 41 die Flip-Flops 45 bis 47 gesetzt bzw. zurückgesetzt werden. Verschwindet der Eingangsimpuls und erscheint damit auf der Leitung 68 wieder eine logische "Null", so werden die Schalter 72 geschlossen und die Kondensatoren 67 über die Widerstände 73 entladen. Der Widerstandswert der Widerstände 73 ist wesentlich kleiner gewählt, als der kleinste Widerstandswert der Widerstände 66, so daß alle RC-Glieder 66, 67 wesentlich schneller entladen als aufgeladen werden. Dies ermöglicht eine sichere Zeitbestimmung auch dann, wenn die Eingangsimpulse des Impulslängendiskriminators mit kurzen Abständen aufeinander folgen.

## Ansprüche

1. Adressierbare Schaltungsanordnung, insbesondere zur Verwendung in den Meß-und/oder Anwähleinheiten einer Meßanordnung, die durch ein Kabel miteinander und mit einer Zentrale verbunden und von dieser Zentrale her individuell anwählbar sind, mit

-einem Adressenspeicher, der eine die Schaltungsanordnung kennzeichnende Adresse speichert, und

-einer Adressen-Erkennungsschaltung, die die gespeicherte Adresse mit Adressen vergleicht, die der Schaltungsanordnung in Form von kodierten elektrischen Impulsen zugeführt werden, und die bei Übereinstimmung einer empfangenen mit der gespeicherten Adresse ein Steuersignal abgibt,

wobei an die adressierbare Schaltungsanordnung wenigstens eine von den Adressensignalen in der Funktion verschiedene weitere Signalart in Form von elektrischen Impulsen übertragen wird,

dadurch **gekennzeichnet,**

daß die Impulse, die die Adressensignale bilden, von den Impulsen, die die weitere Signalart bilden, unterscheidbar sind, daß die wenigstens zwei Impulsarten einem gemeinsamen Eingang (E) der Schaltungsanordnung (1) zugeführt werden, und daß dem gemeinsamen Eingang der Schaltungsanordnung (1) ein Impulsdiskriminator (20) nachgeschaltet ist, der die Adressenimpulse einem Adresseneingang (T) der Adressen-Erkennungsschaltung (3) und die die wenigstens eine weitere Signalart bildenden Impulse einer hiervon verschiedenen Verwendung zuführt.

2. Adressierbare Schaltungsanordnung nach Anspruch 1, dadurch **gekennzeichnet,** daß wenigstens eine weitere Signalart von Setzsignalen gebildet wird, mit deren Hilfe die Adressen-Erkennungsschaltung (3) in einen Bereitschaftszustand gebracht wird.

3. Adressierbare Schaltungsanordnung nach Anspruch 1 oder 2, dadurch **gekennzeichnet,** daß wenigstens eine weitere Signalart von Schaltbefehlssignalen für eine schaltbare Einheit (7) gebildet wird, die von der adressierbaren Schaltungsanordnung (1) angesteuert wird, und daß die Schaltungsanordnung (1) wenigstens eine Schaltbefehlsschaltung (14) umfaßt, die dann ein impulsförmiges Schaltsignal für die schaltbare Einheit (7) abgibt, wenn der Schaltungsanordnung (1) ein impulsförmiges Schaltbefehlssignal zugeführt wird und gleichzeitig die Adressen-Erkennungsschaltung (3) das Steuersignal abgibt.

4. Adressierbare Schaltungsanordnung, insbesondere zur Verwendung in den Meß-und/oder Anwähleinheiten einer Meßanordnung, die durch ein Kabel miteinander und mit einer Zentrale verbunden und von dieser Zentrale her individuell anwählbar sind, mit

- einem Adressenspeicher, der eine die Schaltungsanordnung kennzeichnende Adresse speichert, und

-einer Adressen-Erkennungsschaltung, die die gespeicherte Adresse mit Adressen vergleicht, die der Schaltungsanordnung in Form von kodierten elektrischen Impulsen zugeführt werden, und die bei Übereinstimmung einer empfangenen mit der gespeicherten Adresse ein Steuersignal abgibt,

wobei an die adressierbare Schaltungsanordnung wenigstens eine von den Adressensignalen in der Funktion verschiedene weitere Signalart in Form von elektrischen Impulsen übertragen wird,

dadurch **gekennzeichnet,**

daß die wenigstens eine weitere Signalart von Schaltbefehlssignalen für eine schaltbare Einheit - (7) gebildet wird, die von der adressierbaren Schaltungsanordnung (1) angesteuert wird, und daß die Schaltungsanordnung (1) wenigstens eine Schaltbefehlsschaltung (14) umfaßt, die dann ein impulsförmiges Schaltsignal für die schaltbare Einheit (7) abgibt, wenn der Schaltungsanordnung (1) ein impulsförmiges Schaltbefehlssignal zugeführt wird und gleichzeitig die Adressen-Erkennungsschaltung (3) das Steuersignal abgibt.

5. Adressierbare Schaltungsanordnung nach Anspruch 4, dadurch **gekennzeichnet,** daß die Impulse, die die Adressensignale bilden, von den Impulsen, die die weitere Signalart bilden, unterscheidbar sind, daß die wenigstens zwei Impulsarten einem gemeinsamen Eingang (E) der Schaltungsanordnung (1) zugeführt werden, und daß dem gemeinsamen Eingang der Schaltungsanordnung - (1) ein Impulsdiskriminator (20) nachgeschaltet ist, der die Adressenimpulse einem Adresseneingang - (T) der Adressen-Erkennungsschaltung (3) und die die wenigstens eine weitere Signalart bildenden Impulse einer hiervon verschiedenen Verwendung zuführt.

6. Adressierbare Schaltungsanordnung nach Anspruch 4 oder 5, dadurch **gekennzeichnet,** daß eine zweite weitere Signalart von Setzsignalen gebildet wird, mit deren Hilfe die Adressen-Erkennungsschaltung (3) in einen Bereitschaftzustand gebracht wird.

7. Adressierbare Schaltungsanordnung nach Anspruch 5 oder 6, dadurch **gekennzeichnet,** daß die Impulse, die die zweite weitere Impulsart bilden, sowohl von den Impulsen, die die Adressensignale bilden, als auch von den Impulsen, die die erste weitere Signalart bilden, unterscheidbar sind, daß alle drei Impulsarten einem gemeinsamen Eingang (E) der Schaltungsanordnung (1) zugeführt werden, und daß dem gemeinsamen Eingang der Schaltungsanordnung (1) ein Impulsdiskriminator - (20) nachgeschaltet ist, der die Adressenimpulse einem Adresseneingang (T) der Adressen-Erkennungsschaltung (3), die Setzimpulse einem Setzeingang (PE) der Adressenerkennungsschaltung (3) und die Schaltbefehlssignal-Impulse der Schaltbefehlsschaltung (14) zuführt.

8. Adressierbare Schaltungsanordnung nach einem der vorhergehenden Ansprüche, dadurch **gekennzeichnet,** daß die verschiedenen Impulsarten dadurch voneinander unterscheidbar sind, daß ihre Impulse eine jeweils unterschiedliche zeitliche Länge besitzen, und daß der Impulsdiskriminator - (20) ein Impulslängendiskriminator ist.

9. Adressierbare Schaltungsanordnung nach einem der vorhergehenden Ansprüche, dadurch **gekennzeichnet,** daß die Schaltsignalimpulse gleichzeitig auch als Adressenimpulse verwendet werden.

10. Adressierbare Schaltungsanordnung nach einem der Ansprüche 3 bis 9, dadurch **gekennzeichnet,** daß eine Schaltsignal-Speicherschaltung (12) vorgesehen ist, die dann in einen aktivierten Zustand gebracht wird, in dem sie ein die - schaltbare Einheit (7) in einem vorgebbaren Schaltzustand haltendes Dauerschaltsignal abgibt, wenn ihr das Schaltsignal der Schaltbefehlsschaltung (14) im nicht aktivierten Zustand zugeführt wird, und die aus dem aktivierten in den nicht aktivierten Zustand gebracht wird, wenn ihr das Schaltsignal der Schaltbefehlsschaltung (14) im aktivierten Zustand zugeführt wird.

11. Adressierbare Schaltungsanordnung nach einem der Ansprüche 1 bis 10, dadurch **gekennzeichnet,** daß die Adressen-Erkennungsschaltung - (3) ein programmierbarer Rückwärtszähler ist, dessen Verdrahtung (4) an den Programmiereingängen $(P_1,...P_m)$ den Adressenspeicher (2), dessen Zähleingang (T) den Adresseneingang und dessen Set-Eingang (PE) den Setzeingang bilden und an dessen "0"-Ausgang das Steuersignal erscheint.

12. Adressierbare Schaltungsanordnung nach einem der Ansprüche 3 bis 11, dadurch **gekennzeichnet,** daß die Schaltbefehlsschaltung (14) ein UND-Gatter ist, dessen einem Eingang das Schaltbefehlssignal und dessen anderem Eingang das Steuersignal zugeführt wird.

13. Adressierbare Schaltungsanordnung nach einem der Ansprüche 10 bis 12, dadurch **gekennzeichnet,** daß die Schaltsignal-Speicherschaltung - (12) ein Flip-Flop ist, dessen Takteingang die Schaltsignale der Schaltbefehlsschaltung (14) zugeführt werden.

14. Adressierbare Schaltungsanordnung nach einem der Ansprüche 8 bis 13, dadurch **gekennzeichnet,** daß der Impulslängendiskriminator (20) für jede zu erkennende Impulslänge eine Zeitfensterschaltung (45, 46, 47) umfaßt, durch die eine das Auftreten des Impulsendes abfragende Schaltung (52, 53, 54) nach Verstreichen einer unteren vorgebbaren Grenzwert-Zeitspanne für die betreffende Impulslänge seit Beginn eines jeden Eingangsimpulses für den Impulslängendiskriminator (3) aktiviert und nach Verstreichen einer oberen vorgebbaren Grenzwert-Zeitspanne für die betreffende Impulslänge seit Beginn des Eingangsimpulses desaktiviert wird.

15. Adressierbare Schaltungsanordnung nach Anspruch 14, dadurch **gekennzeichnet,** daß die Zeitfensterschaltung (45, 46, 47) ein Flip-Flop ist, das nach Verstreichen der unteren Grenzwert-Zeitspanne gesetzt und nach Verstreichen der oberen Grenzwert-Zeitspanne zurückgesetzt wird, und daß die das Impulsende abfragende Schaltung (52, 53, 54) ein UND-Gatter ist, dessen einer Eingang durch das gesetzte Flip-Flop freigegeben und durch das zurückgesetzte Flip-Flop gesperrt und dessen anderem Eingang unmittelbar nach dem Ende eines jeden Eingangsimpulses vorübergehend eine logische "Eins" zugeführt wird.

16. Adressierbare Schaltungsanordnung nach Anspruch 14 oder 15, dadurch **gekennzeichnet,** daß die Grenzwert-Zeitspannen mit Hilfe eines Oszillators (30), der mit Beginn eines jeden Eingangsimpulses des Impulslängendiskriminators (20) anschwingt, eines Zählers (31), der die während eines jeden Eingangsimpulses auftretenden Oszillatorimpulse abzählt, und mit Hilfe von Dekodier-Gattern (36 bis 41) ermittelt werden, von denen jedes eine Grenzwert-Zeitspanne dekodiert und beim Erreichen desjenigen Zählwertes im Zähler - (31), der multipliziert mit dem Kehrwert der Frequenz des Oszillators (30) die betreffende Grenzwert-Zeitspanne ergibt, ein Setz-bzw. Rücksetzsignal für die zugehörige Zeitfensterschaltung (45, 46, 47) abgibt.

17. Adressierbare Schaltungsanordnung nach Anspruch 14 oder 15, dadurch **gekennzeichnet,** daß die Grenzwert-Zeitspannen mit Hilfe von analogen Schaltungsanordnungen (60 bis 65) ermittelt werden, von denen jede ein RC-Glied (66, 67) umfaßt, dessen Zeitkonstante die jeweilige Grenzwert-Zeitspanne definiert und dessen Ladekondensator (67) beginnend mit dem Auftreten eines jeden Eingangsimpulses des Impulslängendiskriminators (20) aufgeladen wird und dann, wenn die Ladespannung einen vorgegebenen Schwellenwert erreicht, einen Schmitt-Trigger (70) triggert, der ein Setz-bzw. Rücksetzsignal für die zugehörige Zeitfensterschaltung (45, 46, 47) liefert.

18. Adressierbare Schaltungsanordnung nach Anspruch 17, dadurch **gekennzeichnet,** daß parallel zu jedem Ladekondensator (67) ein steuerbarer Schalter (72) vorgesehen ist, mit dessen Hilfe der Ladekondensator (67) am Ende eines jeden Eingangsimpulses mit einer Zeitkonstante entladen werden kann, die kürzer als seine Lade-Zeitkonstante ist.

19. Adressierbare Schaltungsanordnung nach einem der vorhergehenden Ansprüche, dadurch **gekennzeichnet,** daß sie eine Überprüfungsschaltung (27) umfaßt, der ein den Schaltzustand der schaltbaren Einheit (7) kennzeichnendes Signal zugeführt wird und die dieses Signal nur dann an einen Prüfsignal-Ausgang ($A_2$) der Schaltungsanordnung (1) weiterleitet, wenn die Adressen-Erkennungsschaltung (3) das Steuersignal abgibt.

20. Adressierbare Schaltungsanordnung nach Anspruch 19, dadurch **gekennzeichnet,** daß die Überprüfungsschaltung (27) ein UND-Gatter ist, dessen einem Eingang das den Schaltzustand der schaltbaren Einheit (7) kennzeichnende Signal und dessen anderem Eingang das Steuersignal zugeführt wird.

21. Adressierbare Schaltungsanordnung nach einem der Ansprüche 8 bis 20, dadurch **gekennzeichnet,** daß die Impulse, die die Setzsignale bilden, eine größere zeitliche Länge besitzen als die Impulse, die die Schaltbefehlssignale bilden, die ihrerseits eine größere zeitliche Länge besitzen als die Impulse, die die Adressensignale bilden.

# FIG. 1

E

18

100µs ± 10µs

200µs ± 10µs

300µs ± 10µs

20

IMPULSLÄNGEN-
DISKRIMINATOR

1

2

4    4    +

21    22    ~23    "300µs"

P E T    P₁  P₂  P₃ ........ Pₘ

"200µs"    11    RÜCKWÄRTSZÄHLER    3

"100µs"    Q₁  Q₂  Q₃....Qₙ  "0"

Schaltbefehlssignal    Steuersignal

12    14    5

Q    T
A
Q̄    FF    K
T    Schaltsignal    27

Dauerschaltsignal    26    6

8    25    9  ~7

10

A₂    A₁

0 211 344

FIG. 2

von 18

$100\mu s$ ±$10\mu s$

$200\mu s$ ±$10\mu s$

$300\mu s$ ±$10\mu s$

OSZ.

30

100kHz

$10\mu s$

ZE

31

BINÄRZÄHLER

Q1

Q2

Q3

Q4

Q5

RESET

32 33

34 35

36 37 38 39 40 41

$90\mu s$ $110\mu s$ $190\mu s$ $210\mu s$ $290\mu s$ $310\mu s$

20

D TAKT FF Q Q̄ R

45

48

D TAKT FF Q Q̄ R

46

49

D TAKT FF Q Q̄ R

47

50

51

VERZ.

52 53 54

21 22 23

"$100\mu s$" "$200\mu s$" "$300\mu s$"

0 211 344

FIG. 3